# EUROPEAN PATENT APPLICATION

(11) **EP 4 636 364 A1**
(43) Date of publication of application: **22.10.2025**
(21) Application number: 25169959.1
(22) Date of filing: 11.04.2025
(51) Int. Cl.: G01F 1/66, G01F 15/18, G01F 15/14, G01F 1/667

(54) **REFLECTOR-HOLDER DEVICE FOR AN ULTRASONIC METER**

(30) Priority: 19.04.2024 IT 202400009058
(71) Applicant: Pietro Fiorentini S.p.A., 36057 Arcugnano (VI) (IT)
(72) Inventor: NARDI, Mario Pietro, 36057 Arcugnano (VI) (IT)
(74) Representative: Braidotti, Andrea

(57) **Abstract**

Reflector-holder device (1) for an ultrasonic meter (3) of a fluid, preferably a liquid, said device (1) being suitable to be inserted into a duct (2) for the passage of the fluid of said meter (3), said device (1) being characterised by comprising a first piece (20) and a second piece (30) which:
- are made by moulding in polymeric or polymer-based material,
- once printed they are configured to be joined together to define, following their union, a tubular element (40) which is intended to be passed through by the fluid to be measured and wherein said tubular element (40) comprises:

- a first mouth (44') for the entry or exit of the fluid to be measured into/from said tubular element (40),
- a second mouth (44") for the exit or entry of the fluid from/into said tubular element (40),
said device (1) being also characterised in that:
- the first piece (20) comprises a first support (45) of a first reflector (55) for reflecting ultrasonic signals and a second support (46) of a second reflector (56) for reflecting ultrasonic signals,
- said first reflector (55) is fixed to the first support (45) and said second reflector (56) is fixed to the second support (46) during the moulding of said first piece (20) comprising said two supports (45, 46),
- said two supports (45, 46) with their respective reflectors (55, 56) face each other and are both inclined towards the inside of the tubular element (40),
- said two supports (45, 46) with their respective reflectors (55, 56) are entirely positioned inside the tubular element (40) between said first mouth (44') and said second mouth (44").

## Description

### TECHNICAL FIELD

The present invention relates to a reflector-holder device for an ultrasonic meter of a fluid, preferably a liquid.

In particular, said device is suitable for use in/for an ultrasonic meter for measuring the flow of a fluid, preferably a liquid, for example water.

The present invention also relates to an ultrasonic meter for measuring a fluid, preferably a liquid, which is provided with said reflector-holder device.

In particular, the meter is of the type suitable for measuring one or more quantities relating to a fluid that passes through the reflector-holder device with which the meter is provided, and in more detail it is suitable for measuring at least the flow rate and/or the flow of the fluid that passes through said device.

Preferably, said reflector-holder device is suitable for use inside a water meter and, in particular, a water counter (also called *"water meter*").

Therefore, the invention finds advantageous use in the technical sector of the production and marketing of devices for measuring fluids and can be advantageously used both at a domestic and industrial level. Conveniently, the meter according to the invention can be used for counting the consumption of a fluid, in particular liquid (for example water) in a domestic or industrial system, or in general for counting the consumption of a fluid, in particular liquid (for example water), for example exiting from a container.

### STATE OF THE ART

There are currently various known ultrasonic meters that are suitable for measuring the flow of the fluid passing through them.

Generally, the known meters comprise a structure, which can be metallic (for example made of brass or stainless steel) or polymeric (for example made of plastic), provided with a tubular duct for the passage of the fluid flow to be measured. Furthermore, ultrasonic transducers, configured respectively to emit and receive ultrasonic signals that intercept the fluid flow passing through the duct, are installed in said structure.

In some well-known ultrasonic meters, the transducers are mounted on the same wall of the duct and are positioned one upstream and one downstream along the direction wherein the fluid flows through the duct itself; in this case, the ultrasonic signals emitted by a transducer are guided towards the receiving transducer by one or more reflectors, thus defining a reflection path with a shape such as a "U", "V" or "W".

The correct and repeatable assembly (in terms of position and inclination) of the reflectors directly inside the duct crossed by the fluid to be measured is particularly complicated and laborious from the point of view of construction and the processing required, as well as particularly expensive, particularly in the case of structures with a duct made of metal material.

Therefore, some well-known solutions provide for the use of a dedicated unit, made of polymeric material and having a tubular or semi-tubular shape, which is pre-assembled with said reflectors before being inserted inside the duct through one of the opposite ends of the duct itself. In particular, the assembly of the reflectors on a dedicated unit, which is then inserted into the duct for the passage of the fluid, is more convenient from a construction point of view and, moreover, allows for greater repetitiveness of the assembly of the reflectors in the case of large-scale production.

An example of this well-known solution is described and illustrated in EP2278281.

In the known solutions where a dedicated unit is provided with a tubular section on which the reflectors are pre-assembled before their insertion into the duct, the reflectors themselves are positioned on support bodies and are provided with arms that extend radially and mechanically engage the internal lateral surfaces of the tubular section. In these known solutions, the fixing of the reflectors inside the tubular section is mainly carried out manually and is particularly complicated to perform; furthermore, there remains a certain unwanted play and tolerance in the movement of each reflector with respect to the corresponding support body. Not only that, but the radial arms of the reflectors also create unwanted turbulence in the flow of the fluid to be measured that passes through the tubular section.

Known reflector holder solutions are described and illustrated in documents CN202582789, EP2278281, EP3199923 and CA3195888.

### OBJECTS OF THE INVENTION

The object of the invention is to propose a reflector-holder device for an ultrasonic meter for a fluid, preferably for a liquid, which allows to overcome, at least in part, the drawbacks present in the known solutions.

Another object of the invention is to propose an ultrasonic meter for a fluid, preferably for a liquid, which allows to overcome, at least in part, the drawbacks present in the known solutions.

Another object of the invention is to enable highly stable and repeatable assembly of reflectors, particularly on a large scale.

Another object of the invention is to avoid the manual assembly of the reflectors, while ensuring high repeatability and precision of their assembly.

Another object of the invention is to have a stable positioning of the reflectors over time, thus ensuring high measurement precision.

Another object of the invention is to propose a reflector-holder device that allows to fluidically condition the flow of the fluid to be measured, in particular to increase its speed.

Another object of the invention is to propose a reflector-holder device that allows to obtain a measurement of the fluid flow that is stable over time and easily calibrated.

Another object of the invention is to reduce the pressure difference (and in particular the pressure drop) between the inlet and the outlet of the reflector-holder device, especially in the case of a "U"-shaped reflection path, and this without affecting the measurement performance.

Another object of the invention is to regulate the fluid velocity at the measurement zone in order to have a wider dynamic range.

Another object of the invention is to measure the fluid volume also for lower flow rates.

Another object of the invention is to reduce unwanted turbulence in the fluid flow.

Another object of the invention is to simplify the production of the reflector-holder device.

Another object of the invention is to reduce the material used to make the reflector-holder device.

Another object of the invention is to ensure the cleanliness of the reflectors.

Another object of the invention is to propose a reflector-holder device and a meter that can be mass-produced quickly and efficiently.

Another object of the invention is to propose a reflector-holder device and a meter that are structurally and functionally completely reliable.

Another object of the invention is to propose a reflector-holder device and a meter that are an improvement and/or alternative to traditional ones.

Another object of the invention is to propose a reflector-holder device and a meter that can be produced simply, quickly and at low cost.

Another object of the invention is to propose a reflector-holder device and a meter that present an alternative characterization, both in terms of construction and functionality, compared to traditional ones.

Another object of the invention is to propose a reflector-holder device and a meter that allow to vary and optimize the reflection, in particular in terms of reflection path, of the ultrasonic signals towards the receiving ultrasonic sensor.

### SUMMARY OF THE INVENTION

All the objects mentioned herein, considered either individually or in any combination thereof, and others which will result from the following description are achieved, according to the invention, with a reflector-holder device as defined in claim 1 and with a meter as defined in claim 12.

### DESCRIPTION OF THE FIGURES

The present invention is further clarified hereinafter in some of its preferred practical embodiments reported for purely exemplifying and non-limiting purposes with reference to the attached drawings, wherein:

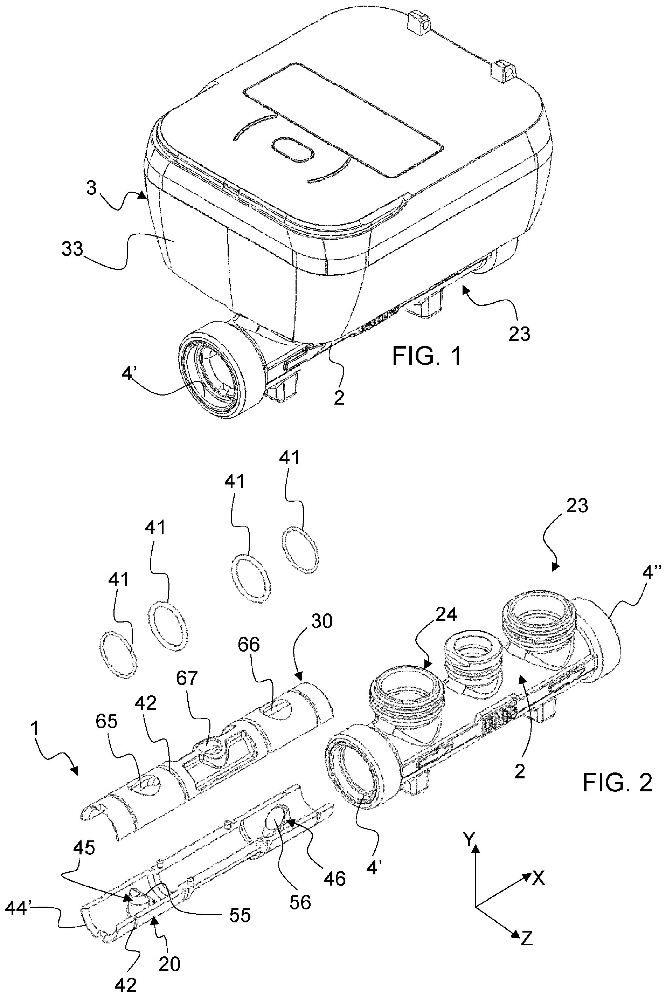

- Figure 1: shows a perspective view of the meter according to the invention,
- Figure 2: shows an exploded perspective view of the reflector-holder device according to the invention before its insertion into the fluid passage duct with which the meter is provided,

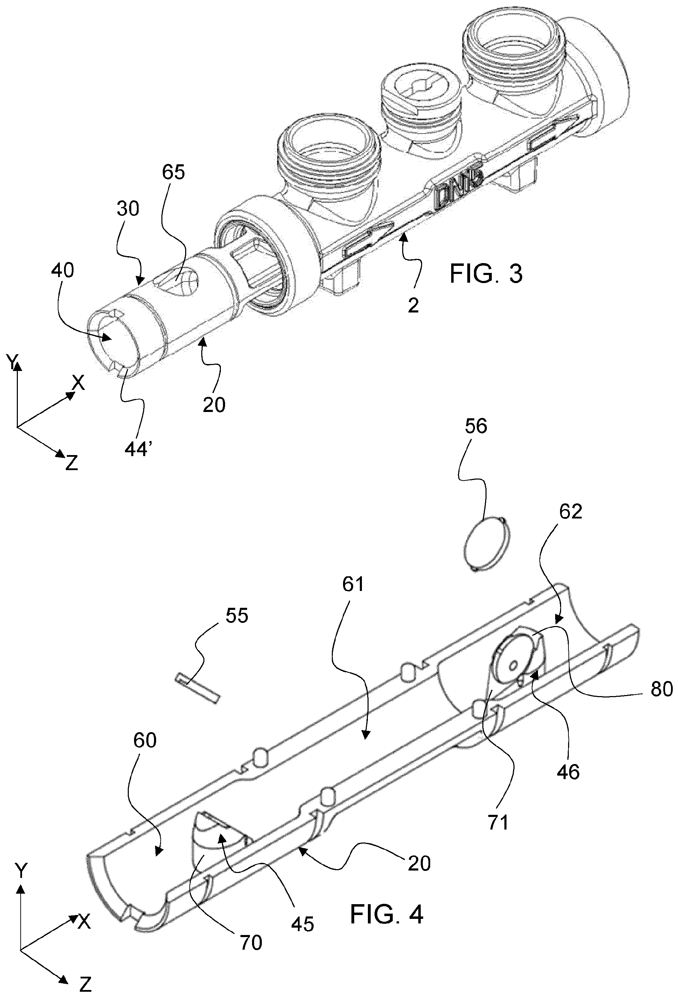

- Figure 3: shows a perspective view of the reflector-holder device partially inserted inside the fluid passage duct with which the meter is provided,
- Figure 4: shows an exploded perspective view of the first piece and the reflectors of the reflector-holder device,
- Figure 5: shows a section of the reflector-holder device along a plane that extends along the X and Y directions and passes through the centre of the tubular element of the device itself,
- Figures 6A - 6C: show corresponding enlarged details of Fig. 5,

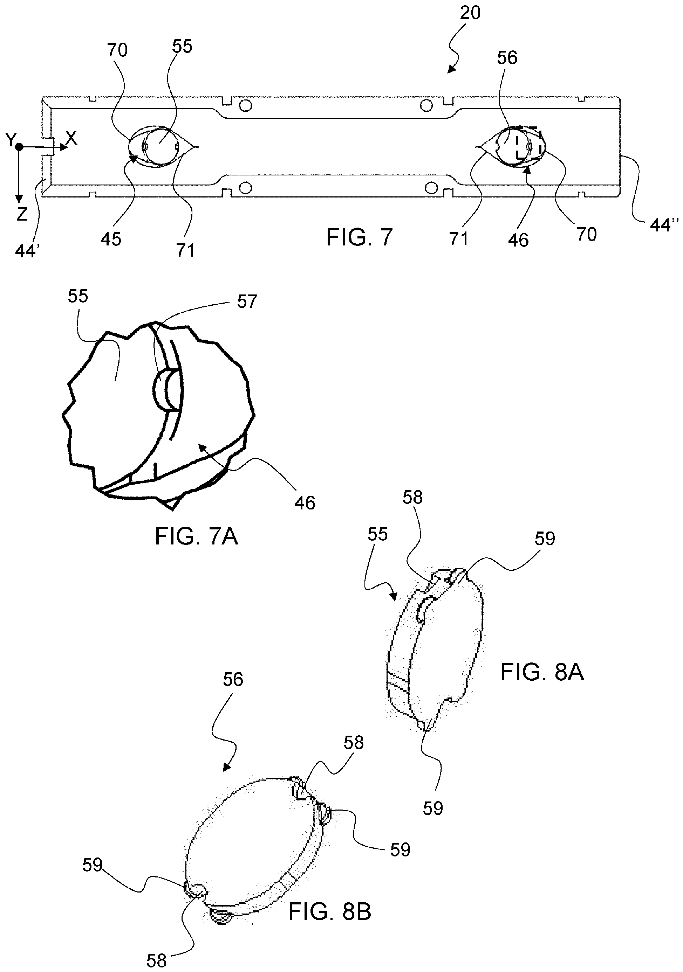

- Figure 7: shows the second piece with the reflectors according to a top view along the Y direction,
- Figure 7A: shows an enlarged detail of Fig. 7,
- Figure 8A: shows a perspective view of the reflector,
- Figure 8B: shows the reflector of Fig. 8A in a different perspective view.

### DETAILED DESCRIPTION OF THE INVENTION AND OF SOME PREFERRED EMBODIMENTS

As shown in the figures, the present invention relates to a reflector-holder device 1 for a meter 3 of a fluid, preferably a liquid, for example water.

In particular, the reflector-holder device 1 is suitable for use in/for a meter 3 of a fluid. In particular, the meter 3 is of the type suitable for detecting the presence of a fluid and/or measuring one or more quantities relating to the fluid that passes through the reflector-holder device 1 which is inserted inside the passage duct 2 with which the meter is provided, and more specifically it is suitable for measuring at least the flow rate and/or the flow of the fluid that passes through the reflector-holder device 1 inserted in the duct 2 of the meter 3.

Preferably, the fluid to be detected/measured is a liquid, such as water, but it could also be a gas or a mixture of gases and, for example, it can be natural gas or another type of gas produced in a decentralized manner, such as biomethane or hydrogen.

Preferably, the device 1 is suitable for use inside a meter of a liquid and, more preferably, in a water meter.

The reflector-holder device 1 is configured to be completely inserted and housed inside a duct 2 of a meter 3 of a fluid, and said duct 2 is configured and intended to be crossed longitudinally by the fluid to be measured.

Conveniently, in one possible embodiment, the duct 2 of the meter 3 wherein the reflector-holder device 1 is inserted is made of metallic material, for example brass. Conveniently, in another possible embodiment, the duct 2 of the meter 3 wherein the reflector-holder device 1 is inserted is made of polymeric material or in any case of polymer-based material, possibly with the addition of reinforcing materials.

In particular, the device 1 is configured to be inserted inside the duct 2 of the meter 3 along a direction corresponding to the main direction of advancement/pass through of the fluid inside the duct itself.

In particular, the duct 2 of the meter 3 has a longitudinal extension along a direction corresponding to the main direction wherein the fluid flow advances inside the duct itself.

The duct 2 of the meter 3 comprises an inlet opening 4' and an outlet opening 4" which are opposite - and preferably facing - each other along the longitudinal extension of the duct. In particular, the inlet opening 4' is the inlet opening of the fluid to be measured inside the duct 2, while the outlet opening 4" is precisely the opening from which the fluid exits the duct.

The device 1 is configured to be inserted into the duct 2 of the meter 3 through the inlet opening 4' or the outlet opening 4" of said duct 2.

The device 1 comprises two pieces, respectively a first piece 20 and a second piece 30, which, following their union and only in combination, define a tubular element 40 (or in any case a substantially tubular element) which is intended to be passed through by the fluid to be measured.

Preferably, the first piece 20 defines, along the entire longitudinal extension of the tubular element 40, a first part of the wall that defines the tubular element, while the second piece 30 defines, along the entire longitudinal extension of the tubular element, the remaining part of the wall of the tubular element 40.

Preferably, the first piece 20 and the second piece 30 have substantially the same longitudinal extension.

Preferably, the first piece 20 and the second piece 30 correspond substantially to the two pieces resulting from a cut of a tubular element -as is the resulting tubular element 40 - along a longitudinal plane, more preferably a longitudinal plane passing through the center of the cross-section of said tubular element. Preferably, the first piece 20 and the second piece 30 correspond substantially to two half-tubes which, joined together, define a tube or in any case a tubular element, as is the tubular element 40.

Preferably, the two pieces 20 and 30 - which, once fixed together, define the tubular element 40 - are made by moulding. Conveniently, the two pieces 20 and 30 can be molded separately or together. Conveniently, the two pieces 20 and 30 can be molded using a single appropriate mold or with two separate molds. Conveniently, the two pieces 20 and 30 can be extracted from the single mold already separated or they can be extracted still connected to each other (for example with a section of sprue), to be separated subsequently.

Preferably, the two pieces 20 and 30 are made entirely or mostly of polymeric material, preferably thermoplastic material. Preferably, the two pieces 20 and 30 can be made by moulding with at least one polymeric resin, for example Polybutylene Terephthalate (PBT), Glycoluryl-Formaldehyde (GF), PolyPropylene (PP), Polyoxymethylene (POM), Polycarbonate, Acrylonitrile Butadiene Styrene (ABS), or other recycled or non-recycled plastic polymeric materials.

Preferably, the two pieces 20 and 30 are made of the same thermoplastic material. Conveniently, in a possible embodiment, the second piece 30 can be made of a different thermoplastic material than the first piece 20.

Preferably, in a possible embodiment, the two pieces 20 and 30 can be fixed together by mechanical engagement, more preferably by means of a form fit or snap interlocking.

Preferably, the two pieces 20 and 30 can be fixed together - and in particular are kept joined together - by means of at least one annular gasket 41 which is fitted externally around the tubular element 40 which is obtained following the mutual contact of the two pieces 20 and 30. More preferably, said at least one annular gasket 41 is fitted externally around the tubular element 40 engaging inside a corresponding annular groove which is defined on the external surface of the tubular element 40 following the mutual contact of the two pieces 20 and 30.

Ideally, two or more annular gaskets 41 are provided which are fitted externally around the tubular element 40 and engage/insert respectively inside two or more corresponding annular grooves 42, obtained on the external surface of the tubular element 40 and spaced apart from each other along the longitudinal extension of the tube itself.

Ideally, at least one annular gasket 41 is an O-ring.

Ideally, in a possible embodiment, the two pieces 20 and 30 are kept joined together exclusively by one or more annular gaskets 41 which are fitted externally around the tubular element.

Preferably, the tubular element 40 can be fluid-tight at least at the union/contact areas between the two pieces 20 and 30. Preferably, the tubular element 40 can be entirely fluid-tight along its longitudinal extension.

Conveniently, the tubular element 40 - which is defined by the union and fixing of the second piece 30 to the first piece 20 - has a longitudinal extension along the X direction, also corresponding to the main direction of advancement of the fluid flow that passes through the channel.

Conveniently, the tubular element 40 - which is defined by the union and fixing of the second piece 30 to the first piece 20 - has a first mouth 44', for the inlet of the fluid to be measured into the tubular element, and a second mouth 44", for the outlet of the fluid to be measured from the tubular element, or vice versa. Preferably, the first mouth 44' and the second mouth 44" are facing each other, aligned and opposite to each other along the longitudinal extension of the tubular element 40. The fluid to be detected/measured can pass through the tubular element 40 with a flow direction F that goes mainly from the first mouth 44' towards the second mouth 44", however the flow of the fluid could pass through the tubular element 40 in the opposite direction, that is, be directed from the second mouth 44" towards the first mouth 44'.

More preferably, the inlet mouth 44' can comprise a bevelled edge, thus defining an invitation and a gradual entry of the fluid to be measured inside the tubular element 40.

The cross-section of the tubular element 40 extends in two directions Y and Z which are perpendicular to each other, and also perpendicular to the X direction, thus completing the Cartesian triplet.

The device 1 comprises two supports 45, 46 for two respective reflectors 55, 56 for ultrasonic signals; in particular the device 1 comprises a first support 45 of a first reflector 55 and a second support 46 of a second reflector 56.

The two supports 45, 46 for the corresponding reflectors 55, 56 are defined/obtained on/with the first piece 20 and, in particular, are formed monolithically on the first piece 20. In particular, the two supports 45, 46 are defined/obtained with the moulding of the first piece 20 and, in more detail, are defined/obtained by means of the same moulding phase that defines the wall of the first piece 20 which internally delimits the tubular element 40.

Preferably, the reflectors 55, 56 are overmoulded onto/with the first piece 20 and, in particular, onto/with the supports 45, 46 defined/obtained in the first piece 20. In particular, said first reflector 55 is fixed to the first support 45 and said second reflector 55 is fixed to the second support 46 during the moulding of said supports 45 and 46.

In particular, the overmoulding of the reflectors 55, 56 on the respective supports 45, 46 requires that the reflector, already pre-formed, is fixed to the corresponding support in the moulding phase during which the first piece 20 is formed with the relative supports 45, 46. In essence, each reflector 55, 56 is fixed and applied to the respective support 45, 46 made of polymeric material during the same moulding process with which the supports 45, 46 provided for in the first piece 20 are made. In more detail, the reflectors 55, 56 comprise dedicated and pre-formed reflective elements which are overmoulded in the polymeric material with which the supports 45, 46 of said reflectors 55, 56 are made. Advantageously, this allows a stable fixing over time of the reflectors 55, 56 to the respective supports 45, 46 and thus to cancel - or in any case reduce - the unwanted effects deriving from the vibrations present during the normal operation of the meter, and also to ensure stability of the measurement over time (precision).

The two supports 45, 46 for the respective reflectors 55, 56 are completely and entirely housed inside the tubular element 40 between the first mouth 44' and the second mouth 44" of said tubular element. In particular, the two supports 45, 46 are mutually spaced respectively from the first mouth 44' and from the second mouth 44" towards the inside of the tubular element 40. Advantageously, in this way, the flow flows more uniformly before impacting the support 45 and also exits the device 1 in a more uniform condition. In particular, the effects due to the variation in the diameter of the cross-section wherein the flow flows and to the presence of the supports are thus appropriately separated, reducing the load losses.

In particular, each of the supports 45, 46 branches off from the internal surface of the first piece 20 which defines the tubular element 40, extending radially towards the inside of the tubular element 40 along a direction parallel to the Y direction.

Conveniently, each of the supports 45, 46 can be spaced from two areas of the internal wall of the tubular element 40 that are diametrically opposed to each other and aligned along a direction parallel to the Z direction; in other words, each support 45, 46 can be interposed between two areas of the internal wall that are diametrically opposed to each other and that are aligned along a direction parallel to the Z direction.

Conveniently, each support 45, 46 extends in height inside the tubular element 40 along a direction parallel to the Y direction, while it extends laterally inside the tubular element 40 along a direction parallel to the Z direction.

Preferably, the internal cross-section of the tubular member 40 is substantially circular.

Conveniently, the diameter of the internal cross-section of the tubular element 40 can vary along the longitudinal extension of the tube itself. Ideally, the tubular element 40 comprises - along its longitudinal extension and considering the main direction of flow of the fluid inside the tubular element itself - an upstream portion 60, an intermediate portion 61 and a downstream portion 62.

Conveniently, the first reflector 55 with the first support 45 is positioned in the upstream portion 60, while the second reflector 56 with the second support 46 is positioned in the downstream portion 62.

Ideally, the internal cross-sectional diameter of the intermediate portion 61 may be smaller than that of the upstream portion 60 and the downstream portion 62.

The reflectors 55, 56 are configured to reflect ultrasonic signals. Preferably, the reflectors 55, 56 comprise a reflective surface for ultrasonic signals.

Preferably, the reflectors 55, 56 are made of a different material than the supports 45, 46.

Ideally, the reflectors 55, 56 are made of metallic material (e.g. stainless steel) or ceramic, while the supports 45, 46 are made of polymeric (e.g. plastic) or in any case polymer-based material, possibly with the addition of reinforcing material.

Preferably, the reflectors 55, 56 are made up of laminar elements (i.e. with a thickness much lower than the other two dimensions) of a substantially elliptical or circular shape.

Preferably, the reflectors 55, 56 comprise two or more appendages 59 - more preferably two by two diametrically aligned and opposite - which, following the injection moulding process (overmoulding) for the production of the first piece 20, are then entirely or mostly embedded within the material that constitutes the corresponding supports 45, 46.

Preferably, the reflectors 55, 56 can have at least one recess 58 for their assembly which is obtained at the reflective front surface - more preferably two recesses 58 diametrically aligned and opposite - which, following the injection moulding process (overmoulding) for the production of the first piece 20, are filled with the material which then, precisely at each said recess, forms a fin 57 to retain the reflector.

Preferably, the reflectors 55, 56 are fixed to the respective supports 45, 46 during the moulding of the first piece 20 and, in particular, they are fixed to the supports during the same moulding phase with which the supports of/in said first piece 20 are obtained. In particular, the reflectors 55, 56 in metallic material are mounted on the supports 45, 46 during the moulding of the supports so as to be co-moulded in the supports made of polymeric material.

The two supports 45, 46 with the respective reflectors 55, 56 face each other and are both inclined towards the inside of the tubular element 40. Preferably, the reflectors 55, 56 mounted on the respective supports 45, 46 face each other and are inclined at approximately 45° with respect to the main direction of advancement/crossing of the fluid inside the tubular element 40, corresponding to a direction parallel to the longitudinal extension direction X of the tubular element 40.

Preferably, the two reflectors 55, 56 are arranged inside the tubular element 40 so as to define a reflection path shaped substantially like a "U".

Ideally, the reflective surfaces of the two reflectors 55, 56 are inclined at approximately 45° with respect to the direction of the fluid flow and are arranged so that they face each other at a 90° angle to each other; advantageously, this allows the ultrasonic sensors to send and receive signals in parallel directions.

Each support 45, 46 has a height (i.e. an extension along a direction parallel to Y with respect to the internal surface of the wall from which the support itself branches off) which is greater towards the outside (i.e. towards the respective mouths 44', 44" of the tubular element 40) and which then decreases continuing towards the inside along the longitudinal extension of the tubular element 40.

Preferably, along two directions parallel to X and Z respectively, at least one support - more preferably the upstream support 45 (along the direction of the fluid flow inside the tubular element 40), ideally each of the two supports 45, 46 - has a shape comprising a first more rounded profile 70 and a second more pointed profile 71. More preferably, the first more rounded profile 70 and the second more pointed profile 71 of the same support face each other and are opposed along a direction parallel to the X direction corresponding to the longitudinal extension of the tubular element 40.

More preferably, said first more rounded profile 70 is defined at the maximum height section (corresponding to the extension along a direction parallel to Y) of the respective support 45 or 46, while the second more pointed profile 71 is defined at the minimum height section of said support 45 or 46. Ideally, said first more rounded profile 70 is closer to the corresponding longitudinal end of the tubular element 40, while said more pointed profile 71 is closer to a more central area along the longitudinal extension of the tubular element 40. In essence, along the longitudinal extension of the tubular element 40, the more rounded profile 70 of the support 45 or 46 is arranged more towards the outside with respect to the more pointed profile of the same support.

Advantageously, the conformation of the support(s) 45, 46 allows to reduce the pressure/load loss between inlet and outlet. In particular, the pressure/load difference/loss between the inlet and the outlet of the tubular element 40 - and/or in any case of the duct 2 wherein the tubular element 40 of the device 1 is inserted - is lower than approximately 0.63 - 0.65 bar, more preferably it is less than or equal to approximately 0.4 bar.

Preferably, at least one support - more preferably the upstream support 45 (along the direction of the fluid flow inside the tubular element), ideally each of the two supports 45, 46 - comprises a protruding element that branches off from the internal surface of the tubular element to protrude inside the tubular element 40; the protruding element has an inclined base - wherein the corresponding reflector 55, 56 is mounted/fixed - which is in fact inclined inwards along the longitudinal extension of the tubular element.

Preferably, at least one support - most preferably the upstream support 45 (along the direction of the fluid flow inside the tubular element), ideally each of the two supports 45, 46 - has a shape that in a top view of the first piece along the Y direction is substantially drop-like. Advantageously, this allows the pressure/load loss between the inlet and the outlet to be reduced.

Preferably, at least one support 45 - more preferably the upstream support (along the direction of the fluid flow inside the tubular element), ideally each of the two supports 45, 46 - can have a substantially wedge-shaped shape with the raised (higher) section 78 facing the respective mouth 44', 44" of the tubular element and wherein the raised section 78 has a more rounded lateral profile 70 than the lowered section 79 which has a more pointed profile 71. Advantageously, this particular shape of the supports 45, 46 favors the conservation of a laminar flow. Advantageously, this can also allow the use of flow stabilizing elements to be avoided, such as suitably profiled walls in order to direct the flow upstream or at the supports.

Preferably, at least one support - most preferably the upstream support 45 (along the direction of the fluid flow within the tubular element), ideally each of the two supports 45, 46 - is substantially internally hollow and, in particular, is hollow below the inclined base which receives the respective reflector 55, 56. Advantageously, this allows to reduce the material used and also to avoid material shrinkage.

Preferably, at least one support - most preferably the upstream support 45 (along the direction of the fluid flow within the tubular element), ideally each of the two supports 45, 46 - has a lateral extension (along the Z direction) that is smaller than the diameter of the tubular element 40.

Preferably, at least one support - most preferably the upstream support 45 (along the direction of the fluid flow within the tubular element), ideally each of the two supports 45, 46 - is spaced from the internal surfaces, diametrically opposed to each other along the Z direction, of the tubular element 40 and, in particular, there are no arms or other portions of material connecting the support to said internal surfaces. Advantageously, this allows to reduce the material required for the construction of the device and, furthermore, unwanted turbulence is reduced/avoided.

Preferably, each reflector 55, 56 is positioned on the respective support 45, 46 so as to define a step 80; in particular, the reflector 55, 56 protrudes from the respective support, and in particular from the upper end of the respective support, so as to define the step 80. Advantageously, this allows to simplify the co-moulding phase of the reflector on the support and, furthermore, considering that the step 80 is exposed to the flow of the fluid to be measured, it allows to generate, at the reflectors, a turbulent flow which thus cleans the reflector 55, 56.

The device 1 comprises two openings, both through, and in particular a first opening 65 for the passage of ultrasonic signals emitted and/or received by a first ultrasonic sensor (not shown) and a second opening 66 for the passage of ultrasonic signals emitted and/or received by a second ultrasonic sensor (not shown).

The first opening 65 and the second opening 66 are obtained on the second piece 30 and are positioned one upstream and one downstream along the direction wherein the flow passes through the tubular element 40 defined by the union of the first piece 20 with the second piece 30.

The first opening 65 and the second opening 66 are obtained on the second piece 30 so that, when the first piece 20 and the second piece 30 are joined to define the tubular element 40, the first opening 65 faces - at least in part - the first reflector 55 mounted on the first support 45 of the first piece 20 and so that the second opening 66 faces - at least in part - the second reflector 56 mounted on the second support 46 of the first piece 20.

In particular, the two openings 65, 66 are configured so that the ultrasonic signals (waves), emitted by at least one corresponding first ultrasonic sensor and second ultrasonic sensor, enter and/or exit the tubular element 40 - which is obtained by joining the two pieces together - passing through said two openings.

Preferably, the first opening 65 and the second opening 66 are configured and formed on the second piece 30 so that a perpendicular axis passing through the corresponding center of the corresponding opening is substantially parallel to the Y direction.

Preferably, the first aperture 65 and the second aperture 66 are configured and formed on the second piece 30 so that the ultrasonic signals pass through the apertures in a direction substantially parallel to Y and, in particular, in a direction that is angled 90° to the main direction of advancement of the fluid flow within the tubular member 40.

In particular, the ultrasonic signals emitted by the first ultrasonic sensor are reflected by the first reflector 55 towards the second reflector 56 which, in turn, reflects them towards the second ultrasonic sensor and are thus received by the latter, and/or vice versa, thus defining a substantially "U" shaped reflection path.

Preferably, the center of the first aperture 65 is substantially aligned along a direction parallel to Y with the center of the first reflector 55 mounted on the first support 45. Preferably, the center of the second aperture 66 is substantially aligned along a direction parallel to Y with the center of the second reflector 56 mounted on the second support 46.

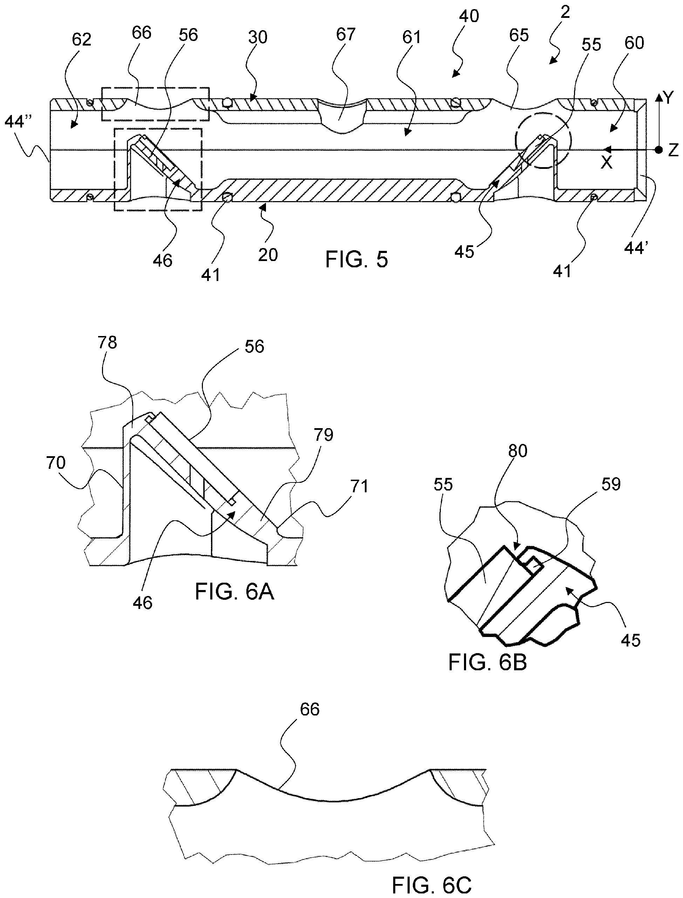

Preferably, as illustrated in Fig. 6C, along the thickness of the wall, the edge delimiting each opening 65, 66 is substantially rounded and, more preferably, is gradually flared in the passage between the external surface and the internal surface of the respective wall wherein the corresponding opening is obtained. Advantageously, this allows the accumulation of air bubbles to be avoided at the opening.

Preferably, in a possible embodiment, the device 1 can comprise a further opening 67, which is through, for a further sensor configured to detect and/or measure a characteristic or quantity of the fluid flowing in the tubular element 40. In more detail, for example, said further sensor can comprise a temperature sensor, and/or a pressure sensor, and/or a sensor of the quality of the liquid (for example water) flowing inside the duct 2, and/or a liquid density sensor. In more detail, the further opening 67 can be passed through (at least in part) by a sensitive element of a transducer of said further sensor for the detection of a desired quantity (for example the temperature, pressure or density of the fluid or the like) of the fluid passing through the measuring channel.

Preferably, the further opening 67 is also obtained on the second piece 30. Preferably, the further opening 67 is interposed between the first opening 65 and the second opening 66 along the direction wherein the flow passes through the tubular element 40 defined by the union of the first piece 20 with the second piece 30.

The present invention also relates to an ultrasonic meter 3 for measuring a fluid, preferably for measuring the flow rate of a fluid, more preferably a liquid (e.g. water) or a gas/gas mixture, which is provided with a reflector-holder device 1 as described above. In particular, the meter 3 comprises a duct 2 for the passage of the fluid to be measured and the reflector-holder device 1 is inserted, preferably removably, inside said duct 2 of the meter 3.

Preferably, said meter 3 is a water meter, also called a "water meter", and can be used to count water consumption in a domestic water system or in an industrial water system, or to count water consumption in general, for example exiting a container, or to count calories from a carrier fluid of a heating/thermal-hydraulic system. Conveniently, the meter 3 can be used to measure other fluids, such as natural gas or other gases produced in a decentralized manner, such as biomethane, hydrogen, or multiphase mixtures.

The meter 3 also comprises a pair of ultrasonic sensors which are arranged respectively one upstream and one downstream along the longitudinal extension direction X of the tubular element 40 of the device 1 which is inserted inside the fluid passage duct 2. Conveniently, the ultrasonic sensors are operatively associated with the duct 2, and with the tubular element 40, so as to emit ultrasonic signals inside the tubular element 40 and receive the emitted and reflected ultrasonic signals inside said tubular element.

Conveniently, each ultrasonic sensor is itself of a traditional type and is configured to emit and receive ultrasonic signals.

Preferably, the meter 3 also comprises a unit for measuring the flow rate and/or fluid flow that passes through the tubular element 40 of the device 1 inserted in the duct 2 of the meter 3. In particular, the measuring unit is configured to calculate the flow rate on the basis of the propagation time of the ultrasonic signals between the two sensors, in particular from the upstream sensor to the downstream sensor, and/or vice versa. In particular, the propagation time is the period of time that elapses between the instant wherein a sensor emits an ultrasonic signal so as to make it propagate through the fluid to be measured until the instant wherein said ultrasonic signal is received by the other sensor. Conveniently, the configuration of the unit for measuring the flow rate or flow is obtained, in a manner known per se to those skilled in the art and therefore not described in detail below, on the basis of the propagation time. Conveniently, this flow measurement unit comprises a microprocessor or microcontroller mounted on an electronic board that is electronically connected to the pair of ultrasonic sensors.

Preferably, the meter 3 comprises a containment structure 33 which contains inside at least one electronic control unit, for example a pre-printed board with a microcontroller or microprocessor, which is electronically connected with the ultrasonic sensors which are operatively associated with the duct 2, and with the tubular element 40, so as to emit ultrasonic signals inside the tubular element 40 and receive the emitted and reflected ultrasonic signals inside said duct 2.

Preferably, the containment structure 33 is configured to internally define a housing volume and comprises a bottom wall, which is provided with a first surface facing inward with respect to said housing volume and a second surface facing outward with respect to said housing volume. Conveniently, the containment structure 33 is watertight, in particular to prevent the entry of the fluid to be measured from the outside into the housing volume. In particular, the housing volume delimited by the containment structure 33 is fluidically separated from the fluid passage duct 2.

Preferably, the meter 3 comprises a fluid passage unit 23, wherein said unit 23 comprises:
- said fluid passage duct 2 internally delimiting a path for the fluid along a flow direction between an inlet opening 4' for said fluid and an outlet opening 4" for said fluid, and
- at least one connecting portion 24 with said bottom wall of said containment structure 33.

Conveniently, the inlet opening 4' of the passage duct 2 and the outlet opening 4" of the passage duct can be connected - mechanically and fluidically - with an upstream pipe and a downstream pipe respectively.

More preferably, the passage duct 2 and the connecting portion 24 are made monolithically in one piece. Ideally, the passage duct 2 and the connecting portion 24 can be made of metallic material, for example brass.

Ideally, the sensors are mounted/housed, entirely or mostly, in corresponding seats obtained in said at least one connecting portion 24 of the unit 23 for the passage of said fluid.

The present invention has been illustrated and described in a preferred embodiment, but it is understood that executive variations may be made to it in practice, without however departing from the scope of protection of the present patent for industrial invention.

## Claims

1. Reflector-holder device (1) for an ultrasonic meter (3) of a fluid, preferably a liquid, said device (1) being suitable to be inserted into a duct (2) for the passage of the fluid of said meter (3), said device (1) being **characterised by** comprising a first piece (20) and a second piece (30) which:
- are made by moulding in polymeric or polymer-based material,
- once printed they are configured to be joined together to define, following their union, a tubular element (40) which is intended to be passed through by the fluid to be measured and wherein said tubular element (40) comprises:
- a first mouth (44') for the entry or exit of the fluid to be measured into/from said tubular element (40),
- a second mouth (44") for the exit or entry of the fluid from/into said tubular element (40),
said device (1) being also **characterised in that**:
- the first piece (20) comprises a first support (45) of a first reflector (55) for reflecting ultrasonic signals and a second support (46) of a second reflector (56) for reflecting ultrasonic signals,
- said first reflector (55) is fixed to the first support (45) and said second reflector (56) is fixed to the second support (46) during the moulding of said first piece (20) comprising said two supports (45, 46),
- said two supports (45, 46) with their respective reflectors (55, 56) face each other and are both inclined towards the inside of the tubular element (40),
- said two supports (45, 46) with their respective reflectors (55, 56) are entirely positioned inside the tubular element (40) between said first mouth (44') and said second mouth (44").

2. Device according to claim 1, wherein the second piece (30) comprises a first opening (65) for the passage of ultrasonic signals emitted and/or received by a first ultrasonic sensor and a second opening (66) for the passage of ultrasonic signals emitted and/or received by a second ultrasonic sensor.

3. Device according to one or more of the preceding claims, wherein the reflectors (55, 56) comprise pre-formed reflective elements, preferably made of metallic material, which are overmoulded in the polymeric material with which the respective supports (45, 46) obtained during the moulding of the first piece (20) are made.

4. Device according to one or more of the preceding claims, comprising at least one annular gasket (41) which is fitted externally around the tubular element (40) which is obtained following the mutual contact of the two pieces (20, 30), to thus keep said two pieces (20, 30) joined together.

5. Device according to one or more of the preceding claims, wherein:
- the first piece (20) and the second piece (30) have substantially the same longitudinal extension,
- said first piece (20) and said second piece (30) substantially correspond to two half-tubes.

6. Device according to one or more of the preceding claims, wherein the two reflectors (55, 56) are arranged inside the tubular element (40) so as to define a reflection path shaped substantially like a "U".

7. Device according to one or more of the preceding claims, wherein:
- the tubular element (40) extends longitudinally along a direction X and the cross-section extends along directions Y and Z perpendicular to each other and also to X,
- each of the supports (45, 46) branches off from the internal surface of the first piece (20) which defines the tubular element (40) extending in height radially towards the inside of the tubular element (40) along a direction parallel to the Y direction,
- each of the supports (45, 46) has, along two directions parallel to X and Z respectively, a conformation comprising a first more rounded profile (70) and a second more pointed profile (71).

8. Device according to the preceding claim, wherein:
- said first more rounded profile (70) is defined at the maximum height section of the respective support (45, 46), while the second more pointed profile (71) is defined at the minimum height section of said support (45, 46),
- along the longitudinal extension of the tubular element (40), the more rounded profile (70) of each support (45, 46) is arranged more towards the outside than the more pointed profile (71) of the same support.

9. Device according to one or more of the preceding claims, wherein:
- the tubular element extends longitudinally along an X direction and the cross-section extends along Y and Z directions perpendicular to each other and also to X,
- each of the supports (45, 46) branches off from the internal surface of the first piece (20) which defines the tubular element (40) extending in height radially towards the inside of the tubular element (40) along a direction parallel to the Y direction,
- at least one support (45, 46) has a shape that in a top view of the first piece (20) along the Y direction is substantially drop-like.

10. Device according to one or more of the preceding claims, wherein each reflector (55, 56) is positioned on the respective support (45, 46) so as to define a step (80) configured so that, in use, it is exposed to the flow of the fluid to be measured, thus generating a turbulent flow for cleaning the corresponding reflector.

11. Device according to one or more of the preceding claims, wherein at least one support (45, 46) is hollow below an inclined base which receives the respective reflector (55, 56).

12. Device according to one or more of the preceding claims, wherein the first opening (65) and the second opening (66) are obtained on the second piece (30) so that, when the first piece (20) and the second piece (30) are joined to define the tubular element (40), the first opening (65) faces the first reflector (55) mounted on the first support (45) of the first piece (20) and so that the second opening (66) faces the second reflector (56) mounted on the second support (46) of the first piece (20).

13. Device according to one or more of the preceding claims, wherein each reflector (55, 56) has at least one recess (58) for its assembly which is obtained at the reflective front surface, preferably two recesses (58) diametrically aligned and opposite, and wherein each recess is configured to be filled, during the moulding for the production of the first piece (20), by the moulding material thus forming a corresponding fin (57) to retain the reflector (55, 56).

14. Device according to one or more of the preceding claims, comprising a further opening (67), which is through, for a further sensor configured to detect and/or measure a characteristic or quantity of the fluid flowing in the tubular element (40).

15. Ultrasonic meter (3) for measuring a fluid, preferably for measuring the flow rate of a fluid, more preferably of a liquid such as water, said meter (3) comprising a duct (2) for the passage of the fluid to be measured and being **characterised by** comprising a reflector-holder device (1) according to one or more of the preceding claims which is removably inserted inside said duct (2) of the meter (3).
